# EUROPEAN PATENT APPLICATION

(11) **EP 4 694 478 A1**
(43) Date of publication of application: **11.02.2026**
(21) Application number: 24784052.3
(22) Date of filing: 18.03.2024
(51) Int. Cl.: H04W 72/21

(54) **INFORMATION TRANSMISSION METHOD, APPARATUS, TERMINAL AND NETWORK DEVICE**

(30) Priority: 06.04.2023 CN 202310361954
(71) Applicant: Datang Mobile Communications Equipment Co., Ltd., Beijing 100085 (CN)
(72) Inventor: ZHAO, Yali, Beijing 100085 (CN); ZHANG, Huiying, Beijing 100085 (CN)
(74) Representative: Studio Torta S.p.A.
(86) International application number: PCT/CN2024/082079
(87) International publication number: WO 2024/207967

(57) **Abstract**

The present disclosure provides an information transmission method, device, terminal and network device, relating to the field of communication technologies. The method includes: a terminal sending first information to a network device, where the first information includes at least one of the following information: indication information of a multi-path capability of the terminal; protocol release version information supported by a first relay terminal; indication information of a multi-path capability of the first relay terminal; indication information that the terminal needs split signaling radio bearer configuration; indication information that the terminal needs packet data convergence protocol (PDCP) duplicate transmission configuration corresponding to signaling radio bearer, where the multi-path capability includes supporting multi-path transmission or not supporting multi-path transmission.

## Description

### CROSS-REFERENCE TO RELATED APPLICATION

This disclosure claims priority to the Chinese Patent Application No. 202310361954.4 filed with the China Patent Office on April 6, 2023, entitled "INFORMATION TRANSMISSION METHOD, DEVICE, TERMINAL AND NETWORK DEVICE", the entire contents of which are incorporated herein by reference.

### TECHNICAL FIELD

The present disclosure relates to the field of communication technologies, and in particular, to an information transmission method, device, terminal and network device.

### BACKGROUND

Direct communication refers to a method in which adjacent terminals (User Equipment, UE) may transmit data over a short distance via a direct communication link (Sidelink), where the direct communication link may also be called a bypass or sidelink. A radio interface corresponding to the sidelink is called a direct communication interface, which may also be called a bypass interface or a sidelink interface. In order to expand network coverage, it may be considered to introduce a relay. The relay itself may be a terminal with a relay function. For a UE-to-Network relay, an interface between the relay and a network device uses a Uu interface, and an interface between the relay and a relayed terminal (referred to as a remote terminal) uses a sidelink interface.

A multi-path mechanism is introduced in related technologies. In multi-path scenarios, there are different path types:
a direct path: a link between a terminal and a network device for direct communication via the Uu interface;
an indirect path: data transmission between the terminal and network device is transferred through the UE-to-Network relay.

A terminal may aggregate different types of paths (for example, there are both direct paths and indirect paths or different indirect paths).

After the introduction of Multi-path, different versions of Relay UE (for example, Release 18 (R18) Relay UE and Release 17 (R17) Relay UE) may coexist in the system. When adding an indirect path or switching an indirect path for a terminal, a Radio Resource Control (RRC) reconfiguration message may first be sent to the terminal. If a Relay UE on the newly added indirect path is in an IDLE/INACTIVE state, it is necessary to trigger the Relay UE to enter a CONNECTED state. This requires the network device to provide appropriate configuration information for the terminal to ensure that the RRC reconfiguration complete message can be transmitted through the newly added indirect path, thereby triggering the Relay UE to enter the CONNECTED state. Therefore, it is necessary to consider how to ensure that the network can provide appropriate configuration information when the terminal adds or changes an indirect path.

**SUMMARY**

The present disclosure aims to provide an information transmission method, device, terminal and network device, so that the network can provide appropriate configuration information when the terminal adds or changes an indirect path.

An embodiment of the present disclosure provides an information transmission method, comprising:
a terminal sending first information to a network device, wherein the first information comprises at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission.

In some embodiments, the first relay terminal is a relay terminal discovered by the terminal through a sidelink discovery, or the first relay terminal is a relay terminal that is performing sidelink communication with the terminal.

In some embodiments, sending the first information to the network device comprises at least one of the following:
sending terminal capability information to the network device, wherein the terminal capability information carries the first information;
sending measurement information to the network device, wherein the measurement information carries the first information;
sending dedicated signaling to the network device, wherein the dedicated signaling carries the first information.

In some embodiments, the method further comprises:
receiving a discovery message sent by the first relay terminal, wherein the discovery message carries at least one of the following information:
the protocol release version information supported by the first relay terminal;
the indication information of the multi-path capability of the first relay terminal.

In some embodiments, a manner of indicating the protocol release version information supported by the first relay terminal comprises at least one of the following:
explicitly indicating a protocol release version supported by the first relay terminal;
implicitly indicating the protocol release version supported by the first relay terminal using bit information.

In some embodiments, the method further comprises:
receiving sidelink interface split signaling radio bearer (Sidelink Signaling Radio Bearer, SL-SRB) configuration information and/or SL-SRB PDCP duplicate transmission configuration information sent by the network device.

In some embodiments, the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

In some embodiments, sending the measurement information to the network device comprises:
sending the measurement information to the network device when a second condition is satisfied.

In some embodiments, the second condition comprises at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

An embodiment of the present disclosure provides an information transmission method, comprising:
a network device obtaining first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission;
determining a target relay terminal and/or configuration information for the terminal according to the first information.

In some embodiments, the first relay terminal is a relay terminal discovered by the terminal through a sidelink discovery, or the first relay terminal is a relay terminal that is performing sidelink communication with the terminal.

In some embodiments, obtaining the first information comprises at least one of the following:
receiving the first information sent by the terminal;
receiving the first information sent by a core network device.

In some embodiments, obtaining the first information comprises at least one of the following:
receiving terminal capability information sent by the terminal, wherein the terminal capability information carries the first information;
receiving measurement information sent by the terminal, wherein the measurement information carries the first information;
receiving dedicated signaling sent by the terminal, wherein the dedicated signaling carries the first information.

In some embodiments, a manner of indicating the protocol release version information supported by the first relay terminal comprises at least one of the following:
explicitly indicating a protocol release version supported by the first relay terminal;
implicitly indicating the protocol release version supported by the first relay terminal using bit information.

In some embodiments, determining the configuration information for the terminal according to the first information comprises:
determining, according to the first information, SL-SRB configuration information and/or SL-SRB PDCP duplicate transmission configuration information corresponding to the terminal;
sending the SL-SRB configuration information and/or SL-SRB PDCP duplicate transmission configuration information to the terminal.

In some embodiments, the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

An embodiment of the present disclosure provides a terminal, comprising: a memory, a transceiver, and a processor:
wherein, the memory is configured to store a computer program; the transceiver is configured to receive and transmit data under the control of the processor; and the processor is configured to read the computer program in the memory and perform following operations:
sending first information to a network device, wherein the first information comprises at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission.

In some embodiments, the first relay terminal is a relay terminal discovered by the terminal through a sidelink discovery, or the first relay terminal is a relay terminal that is performing sidelink communication with the terminal.

In some embodiments, the processor is configured to read the computer program in the memory and perform at least one of the following operations:
sending terminal capability information to the network device, wherein the terminal capability information carries the first information;
sending measurement information to the network device, wherein the measurement information carries the first information;
sending dedicated signaling to the network device, wherein the dedicated signaling carries the first information.

In some embodiments, the processor is configured to read the computer program in the memory and perform the following operations:
receiving a discovery message sent by the first relay terminal, wherein the discovery message carries at least one of the following information:
the protocol release version information supported by the first relay terminal;
the indication information of the multi-path capability of the first relay terminal.

In some embodiments, a manner of indicating the protocol release version information supported by the first relay terminal comprises at least one of the following:
explicitly indicating a protocol release version supported by the first relay terminal;
implicitly indicating the protocol release version supported by the first relay terminal using bit information.

In some embodiments, the processor is configured to read the computer program in the memory and perform the following operations:
receiving SL-SRB configuration information and/or SL-SRB PDCP duplicate transmission configuration information sent by the network device.

In some embodiments, the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

In some embodiments, the processor is configured to read the computer program in the memory and perform the following operations:
sending the measurement information to the network device when a second condition is satisfied.

In some embodiments, the second condition comprises at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

An embodiment of the present disclosure provides a network device, comprising: a memory, a transceiver, and a processor:
wherein, the memory is configured to store a computer program; the transceiver is configured to receive and transmit data under the control of the processor; and the processor is configured to read the computer program in the memory and perform following operations:
obtaining first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission;
determining a target relay terminal and/or configuration information for the terminal according to the first information.

In some embodiments, the first relay terminal is a relay terminal discovered by the terminal through a sidelink discovery, or the first relay terminal is a relay terminal that is performing sidelink communication with the terminal.

In some embodiments, the processor is configured to read the computer program in the memory and perform at least one of the following operations:
receiving the first information sent by the terminal;
receiving the first information sent by a core network device.

In some embodiments, the processor is configured to read the computer program in the memory and perform at least one of the following operations:
receiving terminal capability information sent by the terminal, wherein the terminal capability information carries the first information;
receiving measurement information sent by the terminal, wherein the measurement information carries the first information;
receiving dedicated signaling sent by the terminal, wherein the dedicated signaling carries the first information.

In some embodiments, a manner of indicating the protocol release version information supported by the first relay terminal comprises at least one of the following:
explicitly indicating a protocol release version supported by the first relay terminal;
implicitly indicating the protocol release version supported by the first relay terminal using bit information.

In some embodiments, the processor is configured to read the computer program in the memory and perform following operations:
determining, according to the first information, SL-SRB configuration information and/or SL-SRB PDCP duplicate transmission configuration information corresponding to the terminal;
sending the SL-SRB configuration information and/or SL-SRB PDCP duplicate transmission configuration information to the terminal.

In some embodiments, the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

An embodiment of the present disclosure provides an information transmission device, comprising:
a first sending unit, configured to send first information to a network device, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission.

An embodiment of the present disclosure provides an information transmission device, comprising:
a first obtaining unit, configured to obtain first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission;
a first processing unit, configured to determine a target relay terminal and/or configuration information for the terminal according to the first information.

An embodiment of the present disclosure provides a processor-readable storage medium having a computer program stored thereon, wherein the computer program is executed by a processor to implement the steps of the above-mentioned information transmission method.

The beneficial effects of the above technical solution disclosed in the present disclosure are as follows.

In embodiments of the present disclosure, a terminal reports first information to a network device, where the first information includes at least one of the following: capability indication information of whether the terminal supports Multi-path; protocol release version information supported by a relay terminal; capability indication information of whether the relay terminal supports Multi-path; indication information of whether the terminal needs split signaling radio bearer configuration; indication information of whether the terminal needs PDCP duplicate transmission configuration corresponding to signaling radio bearer, so that the network can provide appropriate configuration information when the terminal adds or changes an indirect path.

### BRIEF DESCRIPTION OF THE DRAWINGS

FIG. 1 is a schematic diagram showing a structure of cellular network communication;
FIG. 2 is a schematic diagram showing a structure of a sidelink network;
FIG. 3 is a schematic diagram showing a relay communication structure from a terminal to a network device;
FIG. 4 shows a first flowchart of an information transmission method according to an embodiment of the present disclosure;
FIG. 5 shows a second flowchart of an information transmission method according to an embodiment of the present disclosure;
FIG. 6 shows a third flowchart of an information transmission method according to an embodiment of the present disclosure;
FIG. 7 shows a fourth flowchart of an information transmission method according to an embodiment of the present disclosure;
FIG. 8 shows a first structural diagram of an information transmission device according to an embodiment of the present disclosure;
FIG. 9 shows a second structural diagram of an information transmission device according to an embodiment of the present disclosure;
FIG. 10 is a schematic structural diagram of a terminal according to an embodiment of the present disclosure;
FIG. 11 is a schematic structural diagram of a network device according to an embodiment of the present disclosure.

### DETAILED DESCRIPTION

In order to make the technical problems to be solved by the present disclosure, technical solutions and advantages clearer, a detailed description will be given below with reference to accompanying drawings and specific embodiments. In the following description, specific details such as detailed configuration and components are provided only to assist in a comprehensive understanding of the embodiments of the present disclosure. Accordingly, it will be apparent to those of ordinary skill in the art that various changes and modifications of the embodiments described herein may be made without departing from the scope and spirit of the disclosure. In addition, descriptions of well-known functions and constructions are omitted for clarity and conciseness.

It should be understood that reference throughout this specification to "one embodiment" or "an embodiment" means that a particular feature, structure, or characteristic related to the embodiment is included in at least one embodiment of the present disclosure. Thus, the appearances of "in one embodiment" or "in an embodiment" in various places throughout this specification are not necessarily referring to the same embodiment. Furthermore, the particular features, structures, or characteristics may be combined in any suitable manner in one or more embodiments.

In various embodiments of the present disclosure, it should be understood that values of serial numbers of following processes do not mean an execution order. The execution order of each process should be determined by its function and internal logic, and should not constitute any limitation on the implementation process of the embodiments of the present disclosure.

In the embodiments of the present disclosure, the term "and/or" describes an association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In the embodiments of the present disclosure, the term "multiple (a plurality of)" refers to two or more than two, and other quantifiers are similar thereto.

The following will clearly and completely describe the technical solutions in the embodiments of the present disclosure in conjunction with the drawings in the embodiments of the present disclosure. Obviously, the described embodiments are only part of the embodiments of the present disclosure, not all of the embodiments. Based on the embodiments of the present disclosure, all other embodiments obtained by those skilled in the art without creative work shall fall within the scope of protection of the present disclosure.

When describing the embodiments of the present disclosure, some concepts used in the following description are first explained.

### 1. Cellular Network Communication

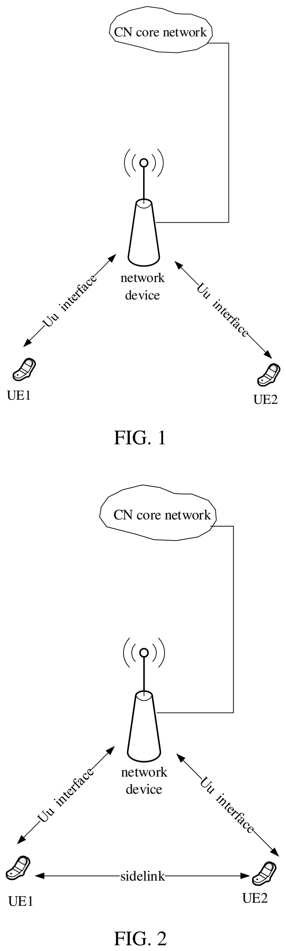

Traditional radio communications use cellular network communications, where terminals and network devices transmit uplink and downlink data or control information through the Uu interface, as shown in FIG. 1.

### 2. Direct communication

Direct communication refers to a method in which adjacent terminals may transmit data over a short distance via a direct communication link. A radio interface corresponding to the sidelink is called a direct communication interface (also called a Sidelink interface, a PC5 interface, a bypass interface, or a sidelink interface), as shown in FIG. 2.

### 3. Relay

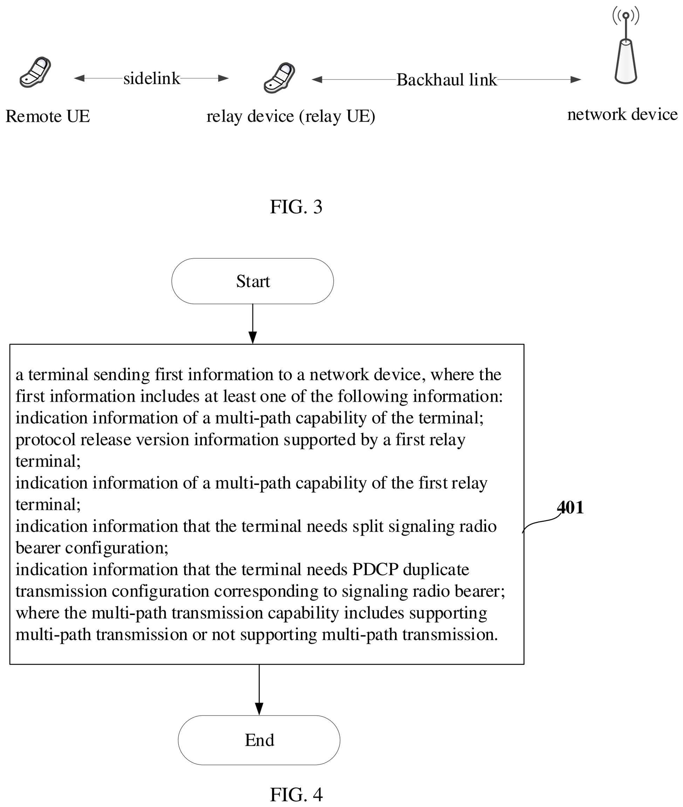

In order to expand network coverage, it may be considered to introduce a relay. The relay itself may be a terminal with a relay function. For a UE-to-Network relay, an interface between the relay and a network device uses a Uu interface, and an interface between the relay and a relayed terminal uses a sidelink interface. The relayed terminal may be called a remote terminal (Remote UE). A schematic diagram of UE-to-Network relay is shown in FIG. 3.

After the introduction of the relay, the following terms may be introduced to simplify the description:
a direct path: the terminal is directly connected to the network device through the Uu interface;
an indirect path: the terminal is connected to the network device through a relay device.

4. Multi-path: a terminal may aggregate different types of paths, for example:
a direct path:
an indirect path: the terminal is connected to the network device through the UE-to-Network relay.

Embodiments of the present disclosure provide an information transmission method, device, terminal and network device, so that the network can provide appropriate configuration information when the terminal adds or changes an indirect path.

The method and the device are based on the same application concept. Since the principles of solving problems by the method and the device are similar, the implementation of the device and the method can refer to each other, and the repeated parts will not be repeated.

As shown in FIG. 4, an embodiment of the present disclosure provides an information transmission method, which is applied to a terminal and specifically includes following steps:
Step 401: a terminal sending first information to a network device, where the first information includes at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs packet data convergence protocol (PDCP) duplicate transmission configuration corresponding to signaling radio bearer;
where the multi-path capability includes supporting multi-path transmission or not supporting multi-path transmission.

In some embodiments, the first relay terminal is a relay terminal discovered by the terminal through a sidelink discovery, or the first relay terminal is a relay terminal that is performing sidelink communication with the terminal.

In this embodiment, the network device is a network device that serves the terminal. The first relay terminal may be a candidate relay terminal detected by the terminal, or may be a relay terminal currently communicating with the terminal through a sidelink interface. A version of the first relay terminal may refer to a communication protocol release version supported by the first relay terminal. The terminal reports to the network device serving the terminal the capability indication information of whether the terminal supports Multi-path, and/or the version indication information of the Relay UE and/or the capability indication information of whether the Relay UE supports Multi-path, so that the network device may configure path information for the terminal according to the information reported by the terminal. For example, the network device determines a target relay terminal to which the terminal needs to connect and/or determines the configuration information of Multi-path for the terminal based on the first information reported by the terminal.

In some embodiments, the terminal may also report to the network device indication information of whether the terminal needs split signaling radio bearer configuration, and/or indication information of whether the terminal needs packet data convergence protocol (PDCP) duplicate transmission configuration corresponding to signaling radio bearer, so that the network device provides appropriate configuration information for the terminal, such as providing the terminal with a Split Signaling Radio Bearer (Split SRB), thereby ensuring that the RRC reconfiguration complete message may be transmitted through the newly added indirect path, thereby triggering the Relay UE to enter a connected state, where the indication information of the split signaling radio bearer and the PDCP duplicate transmission configuration corresponding to the radio bearer may be only for SRB1, and of course may also be for all SRBs.

The indication information that the terminal needs split signaling radio bearer configuration and/or the indication information that the terminal needs packet data convergence protocol (PDCP) duplicate transmission configuration corresponding to signaling radio bearer may be indicated by N bits, for example, by using 1 bit to indicate that the split signaling radio bearer configuration corresponding to SRB1 needs to be provided, or to indicate that the split signaling radio bearer configuration corresponding to SRB1 does not need to be provided.

In embodiments of the present disclosure, a terminal reports first information to a network device, where the first information includes at least one of the following: capability indication information of whether the terminal supports Multi-path; protocol release version information supported by a relay terminal; capability indication information of whether the relay terminal supports Multi-path; indication information of whether the terminal needs split signaling radio bearer configuration; indication information of whether the terminal needs PDCP duplicate transmission configuration corresponding to signaling radio bearer, so that the network can provide appropriate configuration information when the terminal adds or changes an indirect path.

As an optional embodiment, sending the first information to the network device includes at least one of the following:
sending terminal capability information to the network device, where the terminal capability information carries the first information;
sending measurement information to the network device, where the measurement information carries the first information;
sending dedicated signaling to the network device, where the dedicated signaling carries the first information.

In this embodiment, the terminal may carry the first information through a terminal capability reporting and/or measurement reporting process. For example: the terminal carries the indication information of a multi-path capability of the terminal through the terminal capability reporting process and/or the measurement reporting process; the terminal carries the protocol release version information supported by the first relay terminal and/or the indication information of a multi-path capability of the first relay terminal through the measurement reporting process; the terminal carries, through the measurement reporting process, the indication information that the terminal needs packet data convergence protocol (PDCP) duplicate transmission configuration corresponding to signaling radio bearer and/or the indication information that the terminal needs packet data convergence protocol (PDCP) duplicate transmission configuration corresponding to signaling radio bearer.

In some embodiments, the terminal may also send the first information to the network device via dedicated signaling, such as RRC signaling, Medium Access Control Control Element (MAC CE) or physical layer uplink control information (UCI). For example, the terminal reports to the network device through dedicated signaling the indication information that the terminal needs split signaling radio bearer configuration and/or the indication information that the terminal needs Packet Data Convergence Protocol (PDCP) duplicate transmission configuration corresponding to signaling radio bearer.

As an optional embodiment, the method further includes:
receiving a discovery message sent by the first relay terminal, where the discovery message carries at least one of the following information:
the protocol release version information supported by the first relay terminal;
the indication information of the multi-path capability of the first relay terminal.

In this embodiment, before the terminal sends the first information to the network device, the terminal receives a discovery message sent by the Relay UE, where the discovery message carries the protocol release version information supported by the Relay UE and/or capability indication information about whether the Relay UE supports Multi-path.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In this embodiment, when the relay terminal indicates the supported protocol release version information to the terminal, it may directly indicate the protocol release version supported by the relay UE, or may use N (N≥1) bits to implicitly indicate the protocol release version supported by the relay UE.

In some embodiments, the method further includes: receiving sidelink interface split signaling radio bearer (SL-SRB) configuration information and/or SL-SRB PDCP duplicate transmission configuration information sent by the network device.

After the terminal sends the first information to the network device, the network device may determine SL-SRB configuration information and/or SL-SRB PDCP duplicate transmission configuration information corresponding to the terminal based on the first information, and configure the SL-SRB configuration information and/or SL-SRB PDCP duplicate transmission configuration information to the terminal. In some embodiments, the SL-SRB configuration information includes at least transmission configuration information of Split SRB1.

As an optional embodiment, the first relay terminal satisfies a first condition;
the first condition includes at least one of the following:
1) sidelink interface channel quality between the first relay terminal and the terminal is higher than a first value. For all Relay UEs detected by the terminal, the terminal reports relevant information of Relay UEs whose sidelink interface channel quality is higher than the first value to the network device. The first value is a threshold of the sidelink interface channel quality, which may be preconfigured or predefined.
2) Uu interface channel quality between the first relay terminal and the network device is higher than a second value. For all Relay UEs detected by the terminal, the terminal reports relevant information of Relay UEs whose Uu interface channel quality is higher than the second value to the network device. The second value is a threshold of the Uu interface channel quality, which may be preconfigured or predefined.
3) the sidelink interface channel quality between the first relay terminal and the terminal is higher than sidelink interface channel quality between a second relay terminal currently serving the terminal and the terminal. For all Relay UEs detected by the terminal, the terminal reports to the network device relevant information of Relay UEs whose sidelink interface channel quality is higher than the sidelink interface channel quality of the Relay UE currently serving the UE (an offset value may be added).
4) the Uu interface channel quality between the first relay terminal and the network device is higher than Uu interface channel quality between the second relay terminal currently serving the terminal and the network device. For all relay UEs detected by the terminal, the terminal reports to the network device relevant information of relay UEs whose Uu quality is higher than the Uu interface channel quality of the relay UE currently serving the UE.
5) a network device serving the first relay terminal is the same as the network device serving the terminal. That is, if the network device serving the Relay UE and the network device serving the UE are the same network device, the terminal reports the relevant information of the Relay UE to the network device.

In this embodiment, when reporting the first information to the network device, the terminal may filter the detected relay terminals and only report relevant information of the relay terminals that satisfy the first condition to the network device. The first condition includes one or a combination of the above conditions.

In some embodiments, sending the measurement information to the network device includes: sending the measurement information to the network device when a second condition is satisfied.

When the terminal reports the first information to the network device, if the first information is sent in a measurement reporting manner, when a specific measurement event (i.e., the second condition) is satisfied, the UE is triggered to send the first information to the network device. In some embodiments, the second condition includes at least one of the following:
1) sidelink interface channel quality between a relay terminal currently serving the terminal and the terminal is lower than a third value; the relay terminal currently serving the terminal may be referred to as a second relay terminal. The third value is a threshold of the sidelink interface channel quality, which may be preconfigured or predefined.
2) Uu interface channel quality between the relay terminal currently serving the terminal and the network device is lower than a fourth value; the relay terminal currently serving the terminal may be referred to as a second relay terminal. The fourth value is a threshold of the Uu interface channel quality, which may be preconfigured or predefined.
3) Uu interface channel quality of at least one cell currently serving the terminal is lower than a fifth value; the fifth value is a threshold of the Uu interface channel quality, which may be preconfigured or predefined. The fifth value may be the same as or different from the fourth value.
4) sidelink interface channel quality between the first relay terminal and the terminal is higher than a sixth value; the sixth value is a threshold of the sidelink interface channel quality, which may be preconfigured or predefined.
5) Uu interface channel quality between the first relay terminal and the network device is higher than a seventh value; the seventh value is a threshold of the Uu interface channel quality, which may be preconfigured or predefined.
6) the sidelink interface channel quality between the first relay terminal and the terminal is higher than sidelink interface channel quality between a second relay terminal currently serving the terminal and the terminal;
7) the Uu interface channel quality between the first relay terminal and the network device is higher than Uu interface channel quality between the second relay terminal currently serving the terminal and the network device.

In this embodiment, when one or more of the above measurement events are met, the terminal is triggered to report the first information to the network device in a measurement reporting manner, that is, the terminal sends measurement information to the network device, and the first information is carried through the measurement information.

The following example illustrates the implementation process of the information transmission method disclosed herein.

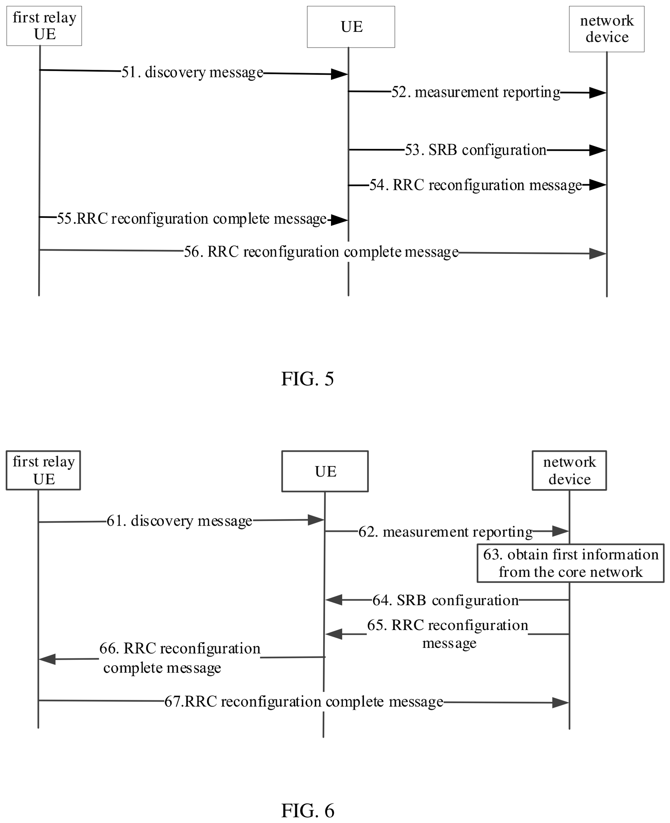

The implementation process of the information transmission method is shown in FIG. 5, and includes:
Step 51: the first Relay UE sends a discovery message, which may also be called a relay discovery message or a sidelink discovery message.

The discovery message carries first information, and the first information includes: a protocol release version supported by the Relay UE and/or indication information of a multi-path capability, and the multi-path capability includes a capability of whether the Relay UE supports Multi-path.

Specifically, the protocol release version supported by the Relay UE may be indicated using one of the following manners:
(1) directly indicating the protocol release version supported by the Relay UE;
(2) implicitly indicating the protocol release version supported by the Relay UE using N (N≥1) bits. For example, if 1 bit is used, it indicates that R17 is supported when a value is 0, and it indicates that R18 or a later version is supported when the value is 1.

Step 52: the UE performs measurement reporting, where the first information is carried through the measurement information.

The UE detects the discovery message sent by the Relay UE, and when a specific measurement event is met, the UE is triggered to send the first information to the network device. The first information reported by the UE to the network device may also include at least one of the following: indication information of a multi-path capability of the terminal; indication information of whether the terminal needs split signaling radio bearer configuration; indication information of whether the terminal needs PDCP duplicate transmission configuration corresponding to signaling radio bearer.

The specific measurement events include but are not limited to one or more of the following:
1) sidelink interface channel quality between the Relay UE currently serving the UE and the UE is lower than a third value;
2) Uu interface channel quality between the Relay UE currently serving the UE and the network device is lower than a fourth value;
3) Uu interface channel quality of one or more cells currently serving the UE is lower than a fifth value;
4) sidelink interface channel quality between the first Relay UE and the UE is higher than a sixth value;
5) Uu interface channel quality between the first Relay UE and the network device is higher than a seventh value;
6) the sidelink interface channel quality between the first Relay UE and the UE is higher than sidelink interface channel quality between the Relay UE currently serving the terminal (which may be referred to as a remote terminal, Remote UE) and the Remote UE;
7) the Uu interface channel quality between the first Relay UE and the network device is higher than Uu interface channel quality between the Relay UE currently serving the Remote UE and the network device.

In some embodiments, when reporting relevant information of the first Relay UE to the network device, the UE may report all detected Relay UEs to the network device, or may filter the detected Relay UEs and only report relevant information of Relay UEs that satisfy a specific condition (i.e., the first condition) to the network device. The specific condition includes but is not limited to one or a combination of the following:
1) sidelink interface channel quality between the detected first relay UE and the UE is higher than a first value;
2) Uu interface channel quality between the detected first Relay UE and the network device is higher than a second value;
3) sidelink interface channel quality between the detected first relay UE and the UE is higher than sidelink interface channel quality between the relay UE (i.e., the second relay terminal) currently serving the UE and the UE (an offset value may be added);
4) Uu interface channel quality between the detected first Relay UE and the network device is higher than Uu interface channel quality between the Relay UE currently serving the UE and the network device;
5) a network device serving the first Relay UE and the network device serving the UE are the same network device.

Step 53: the network device sends, to the UE, SRB configuration, including: SL-SRB configuration information (such as Split SRB configuration information) or SL-SRB PDCP duplicate transmission configuration information.

In this step, if according to step 2, the network device determines that the first Relay UE supports the R17 protocol release version or supports the R17 protocol release version and supports Multi-path, the network device configures a split SRB for the UE, where the Split SRB includes at least Split SRB1.

The network device configures a split SRB for the UE, where the Split SRB includes at least Split SRB1.

Step 54: the network device sends an RRC reconfiguration message to the UE to add or replace an indirect path.

It should be noted that step 53 and step 54 may be implemented using different RRC reconfiguration messages or the same RRC reconfiguration message. The RRC reconfiguration message at least includes Relay UE indication information corresponding to the indirect path to be added.

Step 55: the UE sends an RRC reconfiguration complete message to the first relay UE selected in step 54. The RRC reconfiguration complete message may be sidelink radio link control 1 (SL-RLC1).

If the selected first Relay UE is in an RRC IDLE state/INACTIVE state, the first Relay UE triggers, after receiving the RRC reconfiguration complete message, the Relay UE to initiate an RRC connection establishment process on the Uu interface to establish a Uu RRC connection.

Step 56: the selected first Relay UE forwards the RRC reconfiguration complete message sent by the Remote UE to the Relay UE to the network device.

As another optional embodiment, the implementation process of the information transmission method is shown in FIG. 6, including:
Step 61: the first Relay UE sends a discovery message. The content of the first information carried in the discovery message is not described in detail here.
Step 62: the UE performs measurement reporting, where the first information is carried through the measurement information.

The UE detects the discovery message sent by the Relay UE, and when a specific measurement event is met, the UE is triggered to send the first information to the network device. The specific measurement events include but are not limited to one or more of the following:
1) sidelink interface channel quality between the Relay UE currently serving the UE and the UE is lower than a third value;
2) Uu interface channel quality between the Relay UE currently serving the UE and the network device is lower than a fourth value;
3) Uu interface channel quality of one or more cells currently serving the UE is lower than a fifth value;
4) sidelink interface channel quality between the first Relay UE and the UE is higher than a sixth value;
5) Uu interface channel quality between the first Relay UE and the network device is higher than a seventh value;
6) the sidelink interface channel quality between the first Relay UE and the UE is higher than sidelink interface channel quality between the Relay UE currently serving the terminal (which may be referred to as a remote terminal, Remote UE) and the Remote UE;
7) the Uu interface channel quality between the first Relay UE and the network device is higher than Uu interface channel quality between the Relay UE currently serving the Remote UE and the network device.

In some embodiments, when reporting relevant information of the first Relay UE to the network device, the UE may report all detected Relay UEs to the network device, or may filter the detected Relay UEs and only report relevant information of Relay UEs that satisfy a specific condition (i.e., the first condition) to the network device. The specific condition includes but is not limited to one or a combination of the following:
1) sidelink interface channel quality between the detected first relay UE and the UE is higher than a first value;
2) Uu interface channel quality between the detected first Relay UE and the network device is higher than a second value;
3) sidelink interface channel quality between the detected first relay UE and the UE is higher than sidelink interface channel quality between the relay UE (i.e., the second relay terminal) currently serving the UE and the UE (an offset value may be added);
4) Uu interface channel quality between the detected first Relay UE and the network device is higher than Uu interface channel quality between the Relay UE currently serving the UE and the network device;
5) a network device serving the first Relay UE and the network device serving the UE are the same network device.

Step 63: in some embodiments, the network device may obtain first information from the core network, for example, obtaining from the core network capability indication information of whether the UE supports Multi-path reported by the UE to the network device serving the UE, and/or protocol release version information supported by the first Relay UE detected by the UE and/or capability indication information of whether the first Relay UE supports Multi-path, and/or indication information of whether the terminal needs split signaling radio bearer configuration, and/or indication information of whether the terminal needs PDCP duplicate transmission configuration corresponding to signaling radio bearer.

Step 64: the network device sends, to the UE, SRB configuration, including: SL-SRB configuration information (such as Split SRB configuration information) or SL-SRB PDCP duplicate transmission configuration information.

If the first Relay UE supports the R17 protocol release version or supports the R17 protocol release version and supports Multi-path, the network device configures a split SRB for the UE, where the Split SRB includes at least Split SRB1.

Step 65: the network device sends an RRC reconfiguration message to the UE to add or replace an indirect path.

Step 65 and step 64 may be implemented using different RRC reconfiguration messages or the same RRC reconfiguration message. The RRC reconfiguration message at least includes Relay UE indication information corresponding to the indirect path to be added.

Step 66: the UE sends an RRC reconfiguration complete message to the first relay UE selected in step 65.

If the selected first Relay UE is in an RRC IDLE state/INACTIVE state, the first Relay UE triggers, after receiving the RRC reconfiguration complete message, the Relay UE to initiate an RRC connection establishment process on the Uu interface to establish a Uu RRC connection.

Step 67: the selected first Relay UE forwards the RRC reconfiguration complete message sent by the Remote UE to the Relay UE to the network device.

In embodiments of the present disclosure, a terminal reports first information to a network device, where the first information includes at least one of the following: capability indication information of whether the terminal supports Multi-path; protocol release version information supported by a relay terminal; capability indication information of whether the relay terminal supports Multi-path; indication information of whether the terminal needs split signaling radio bearer configuration; indication information of whether the terminal needs PDCP duplicate transmission configuration corresponding to signaling radio bearer. This enables the network to provide appropriate configuration information when the terminal adds or changes an indirect path, thereby resolving the compatibility issue of relay UE supporting Multi-path.

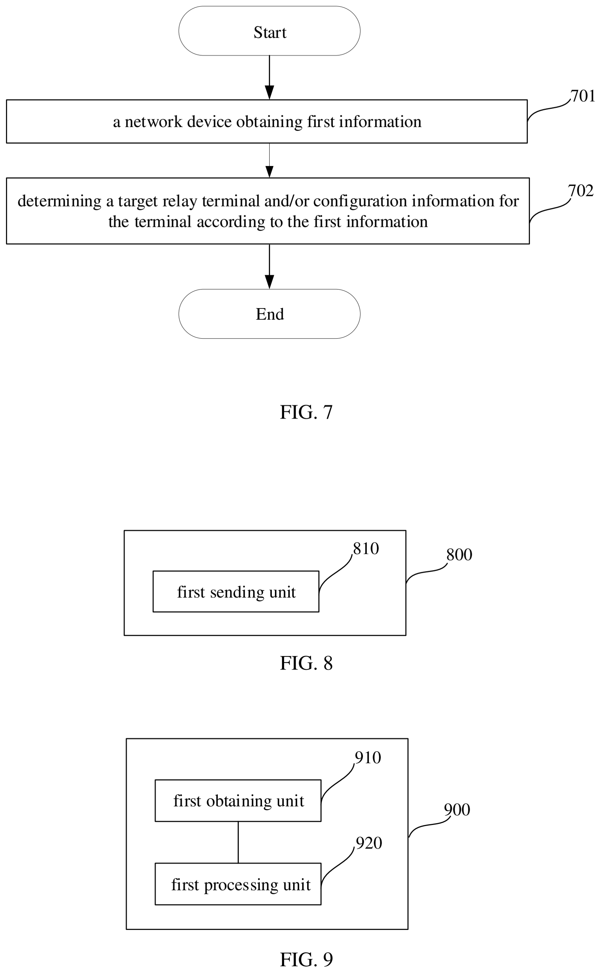

As shown in FIG. 7, an embodiment of the present disclosure further provides an information transmission method, which is applied to a network device and includes:
Step 701: a network device obtaining first information, where the first information includes at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
where the multi-path capability includes supporting multi-path transmission or not supporting multi-path transmission;

Step 702: determining a target relay terminal and/or configuration information for the terminal according to the first information.

In this embodiment, the network device may obtain at least one of the following information: capability indication information of whether the terminal supports Multi-path; protocol release version information supported by a relay terminal; capability indication information of whether the relay terminal supports Multi-path; indication information of whether the terminal needs split signaling radio bearer configuration; indication information of whether the terminal needs PDCP duplicate transmission configuration corresponding to signaling radio bearer, and may provide appropriate configuration information when the terminal adds or changes an indirect path based on the obtained information.

The indication information that the terminal needs split signaling radio bearer configuration and/or the indication information that the terminal needs PDCP duplicate transmission configuration corresponding to signaling radio bearer may be indicated by N bits, for example, by using 1 bit to indicate that the split signaling radio bearer configuration corresponding to SRB1 needs to be provided, or to indicate that the split signaling radio bearer configuration corresponding to SRB1 does not need to be provided.

In some embodiments, the first relay terminal is a relay terminal discovered by the terminal through a sidelink discovery, or the first relay terminal is a relay terminal that is performing sidelink communication with the terminal.

In some embodiments, obtaining the first information includes at least one of the following:
receiving the first information sent by the terminal;
receiving the first information sent by a core network device.

In this embodiment, the first information obtained by the network device may be reported by the terminal, or may be obtained by the network device from the core network.

Taking the terminal reporting the first information to the network device serving the terminal as an example, the terminal reports to the network device serving the terminal capability indication information of whether the terminal supports Multi-path, and/or version indication information of the Relay UE and/or capability indication information of whether the Relay UE supports Multi-path. The network device may configure path information for the terminal based on the information reported by the terminal. For example, the network device determines a target relay terminal that the terminal needs to connect to and/or determines Multi-path configuration information of the terminal based on the first information reported by the terminal.

In some embodiments, obtaining the first information includes at least one of the following:
receiving terminal capability information sent by the terminal, where the terminal capability information carries the first information;
receiving measurement information sent by the terminal, where the measurement information carries the first information;
receiving dedicated signaling sent by the terminal, where the dedicated signaling carries the first information.

In this embodiment, if the first information obtained by the network device is reported by the terminal, the terminal may carry the first information through a terminal capability reporting and/or measurement reporting process. For example: the terminal carries the indication information of a multi-path capability of the terminal through the terminal capability reporting process and/or the measurement reporting process; the terminal carries the protocol release version information supported by the first relay terminal and/or the indication information of a multi-path capability of the first relay terminal through the measurement reporting process. The terminal carries, through the measurement reporting process, the indication information that the terminal needs packet data convergence protocol (PDCP) duplicate transmission configuration corresponding to signaling radio bearer and/or the indication information that the terminal needs packet data convergence protocol (PDCP) duplicate transmission configuration corresponding to signaling radio bearer.

In some embodiments, the terminal may also send the first information to the network device via dedicated signaling, such as RRC signaling, MAC CE, or UCI. For example, the terminal reports to the network device through dedicated signaling the indication information that the terminal needs split signaling radio bearer configuration and/or the indication information that the terminal needs Packet Data Convergence Protocol (PDCP) duplicate transmission configuration corresponding to signaling radio bearer.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In this embodiment, the protocol release version information supported by the first relay terminal obtained by the network device may directly indicate the protocol release version supported by the Relay UE, or may use N (N≥1) bits to implicitly indicate the protocol release version supported by the Relay UE.

As an optional embodiment, the first relay terminal satisfies a first condition;
the first condition includes at least one of the following:
1) sidelink interface channel quality between the first relay terminal and the terminal is higher than a first value. For all Relay UEs detected by the terminal, the terminal reports relevant information of Relay UEs whose sidelink interface channel quality is higher than the first value to the network device.
2) Uu interface channel quality between the first relay terminal and the network device is higher than a second value. For all Relay UEs detected by the terminal, the terminal reports relevant information of Relay UEs whose Uu interface channel quality is higher than the second value to the network device.
3) the sidelink interface channel quality between the first relay terminal and the terminal is higher than sidelink interface channel quality between a second relay terminal currently serving the terminal and the terminal. For all Relay UEs detected by the terminal, the terminal reports to the network device relevant information of Relay UEs whose sidelink interface channel quality is higher than the sidelink interface channel quality of the Relay UE currently serving the UE (an offset value may be added).
4) the Uu interface channel quality between the first relay terminal and the network device is higher than Uu interface channel quality between the second relay terminal currently serving the terminal and the network device. For all relay UEs detected by the terminal, the terminal reports to the network device relevant information of relay UEs whose Uu quality is higher than the Uu interface channel quality of the relay UE currently serving the UE.
5) a network device serving the first relay terminal is the same as the network device serving the terminal. That is, if the network device serving the Relay UE and the network device serving the UE are the same network device, the terminal reports the relevant information of the Relay UE to the network device.

In this embodiment, the relevant information of the first relay terminal obtained by the network device may be relevant information of a relay terminal that satisfies the first condition. The first condition includes one or a combination of the above conditions.

As an optional embodiment, determining the configuration information for the terminal according to the first information includes:
determining, according to the first information, SL-SRB configuration information and/or SL-SRB PDCP duplicate transmission configuration information corresponding to the terminal;
sending the SL-SRB configuration information and/or SL-SRB PDCP duplicate transmission configuration information to the terminal.

In this embodiment, after obtaining the first information, the network device may determine SL-SRB configuration information and/or SL-SRB PDCP duplicate transmission configuration information corresponding to the terminal based on the first information, and configure the SL-SRB configuration information and/or SL-SRB PDCP duplicate transmission configuration information to the terminal. In some embodiments, the SL-SRB configuration information includes at least transmission configuration information of Split SRB1.

In embodiments of the present disclosure, the network device may obtain first information and, based on the obtained first information, may provide appropriate configuration information when the terminal adds or changes an indirect path.

The above embodiments have introduced the information transmission methods disclosed herein. The following embodiments will further illustrate the corresponding devices with reference to the accompanying drawings.

Specifically, as shown in FIG. 8, an embodiment of the present disclosure provides an information transmission device 800, which is applied to a terminal and includes:
a first sending unit 810, configured to send first information to a network device, where the first information includes at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
where the multi-path capability includes supporting multi-path transmission or not supporting multi-path transmission.

In some embodiments, the first relay terminal is a relay terminal discovered by the terminal through a sidelink discovery, or the first relay terminal is a relay terminal that is performing sidelink communication with the terminal.

In some embodiments, the first sending unit is configured to perform at least one of the following:
sending terminal capability information to the network device, where the terminal capability information carries the first information;
sending measurement information to the network device, where the measurement information carries the first information;
sending dedicated signaling to the network device, where the dedicated signaling carries the first information.

In some embodiments, the device further comprises:
a first receiving unit, configured to receive a discovery message sent by the first relay terminal, where the discovery message carries at least one of the following information:
the protocol release version information supported by the first relay terminal;
the indication information of the multi-path capability of the first relay terminal.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In some embodiments, the device further comprises:
a second receiving unit, configured to receive SL-SRB configuration information and/or SL-SRB PDCP duplicate transmission configuration information sent by the network device.

In some embodiments, the first relay terminal satisfies a first condition;
the first condition includes at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

In some embodiments, the first sending unit is specifically configured to: send the measurement information to the network device when a second condition is satisfied.

In some embodiments, the second condition includes at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

It should be noted here that the above-mentioned device provided in the embodiment of the present disclosure can implement all the method steps implemented in the above-mentioned method embodiment applied to the terminal, and can achieve the same technical effects. The parts and beneficial effects of this embodiment that are the same as those of the method embodiment will not be described in detail here.

Specifically, as shown in FIG. 9, an embodiment of the present disclosure provides an information transmission device 900, which is applied to a network device and includes:
a first obtaining unit 910, configured to obtain first information, where the first information includes at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
where the multi-path capability includes supporting multi-path transmission or not supporting multi-path transmission;
a first processing unit 920, configured to determine a target relay terminal and/or configuration information for the terminal according to the first information.

In some embodiments, the first relay terminal is a relay terminal discovered by the terminal through a sidelink discovery, or the first relay terminal is a relay terminal that is performing sidelink communication with the terminal.

In some embodiments, the first obtaining unit is specifically configured to perform at least one of the following:
receiving the first information sent by the terminal;
receiving the first information sent by a core network device.

In some embodiments, the first obtaining unit is specifically configured to perform at least one of the following:
receiving terminal capability information sent by the terminal, where the terminal capability information carries the first information;
receiving measurement information sent by the terminal, where the measurement information carries the first information;
receiving dedicated signaling sent by the terminal, where the dedicated signaling carries the first information.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In some embodiments, the first processing unit is specifically configured to:
determine, according to the first information, SL-SRB configuration information and/or SL-SRB PDCP duplicate transmission configuration information corresponding to the terminal;
send the SL-SRB configuration information and/or SL-SRB PDCP duplicate transmission configuration information to the terminal.

In some embodiments, the first relay terminal satisfies a first condition;
the first condition includes at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

It should be noted here that the above-mentioned device provided in the embodiment of the present disclosure can implement all the method steps implemented in the above-mentioned method embodiment applied to the network device, and can achieve the same technical effects. The parts and beneficial effects of this embodiment that are the same as those of the method embodiment will not be described in detail here.

It should be noted that the division of units in the embodiments of the present disclosure is schematic and is merely a logical function division. There may be other division manners in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to execute all or part of the steps of the method described in various embodiments of the present disclosure. The aforementioned storage medium includes: U disk, mobile hard disk, read-only memory (ROM), random access memory (RAM), magnetic disk or optical disk, etc., which may store program codes.

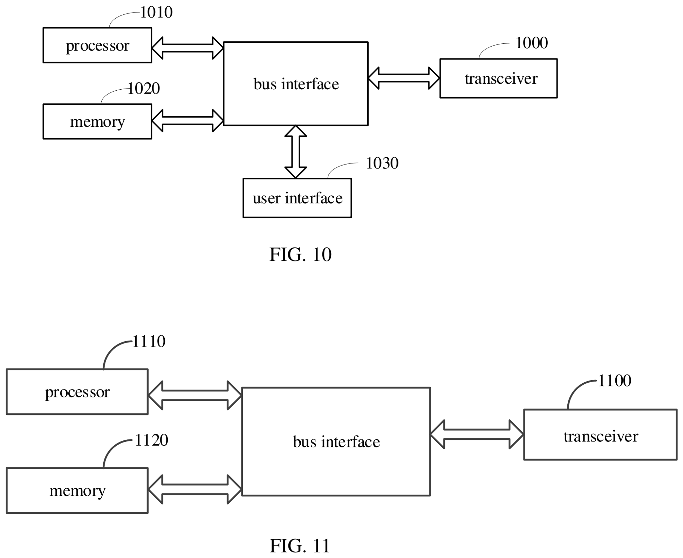

As shown in FIG. 10, an embodiment of the present disclosure further provides a terminal, including: a memory 1020, a transceiver 1000, and a processor 1010; where the memory 1020 is configured to store a computer program; the transceiver 1000 is configured to receive and transmit data under the control of the processor 1010; and the processor 1010 is configured to read the computer program in the memory and perform following operations:
sending first information to a network device, where the first information includes at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
where the multi-path capability includes supporting multi-path transmission or not supporting multi-path transmission.

In some embodiments, the first relay terminal is a relay terminal discovered by the terminal through a sidelink discovery, or the first relay terminal is a relay terminal that is performing sidelink communication with the terminal.

In some embodiments, the processor is configured to read the computer program in the memory and perform at least one of the following operations:
sending terminal capability information to the network device, where the terminal capability information carries the first information;
sending measurement information to the network device, where the measurement information carries the first information;
sending dedicated signaling to the network device, where the dedicated signaling carries the first information.

In some embodiments, the processor is configured to read the computer program in the memory and perform the following operations:
receiving a discovery message sent by the first relay terminal, where the discovery message carries at least one of the following information:
the protocol release version information supported by the first relay terminal;
the indication information of the multi-path capability of the first relay terminal.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In some embodiments, the processor is configured to read the computer program in the memory and perform the following operations:
receiving SL-SRB configuration information and/or SL-SRB PDCP duplicate transmission configuration information sent by the network device.

In some embodiments, the first relay terminal satisfies a first condition;
the first condition includes at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

In some embodiments, the processor is configured to read the computer program in the memory and perform the following operations:
sending the measurement information to the network device when a second condition is satisfied.

In some embodiments, the second condition includes at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

In FIG. 10, the bus architecture may include any number of interconnected buses and bridges, specifically linking various circuits of one or more processors represented by processor 1010 and memory represented by memory 1020 together. The bus architecture may also link together various other circuits such as peripheral devices, voltage regulators, and power management circuits, which are all well known in the art and, therefore, will not be described further herein. The bus interface provides an interface. The transceiver 1000 may be a plurality of elements, i.e., including a transmitter and a transceiver, providing a unit for communicating with various other devices over a transmission medium. For different user devices, the user interface 1030 may also be an interface capable of connecting to external or internal devices as required, and the connected devices include but are not limited to a keypad, a display, a speaker, a microphone, a joystick, and the like.

The processor 1010 is responsible for managing the bus architecture and general processing, and the memory 1020 may store data used by the processor 1010 when performing operations.

In some embodiments, the processor 1010 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to execute any of the methods provided in the embodiments of the present disclosure according to the obtained executable instructions. The processor and memory may also be physically separated.

It should be noted here that the above-mentioned terminal provided in the embodiment of the present disclosure can implement all the method steps implemented in the above-mentioned method embodiment applied to the terminal, and can achieve the same technical effects. The parts and beneficial effects of this embodiment that are the same as those of the method embodiment will not be described in detail here.

As shown in FIG. 11, an embodiment of the present disclosure further provides a network device, including: a memory 1120, a transceiver 1100, and a processor 1110; where the memory 1120 is configured to store a computer program; the transceiver 1100 is configured to receive and transmit data under the control of the processor 1110; and the processor 1110 is configured to read the computer program in the memory and perform following operations:
obtaining first information, where the first information includes at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
where the multi-path capability includes supporting multi-path transmission or not supporting multi-path transmission;
determining a target relay terminal and/or configuration information for the terminal according to the first information.

In some embodiments, the first relay terminal is a relay terminal discovered by the terminal through a sidelink discovery, or the first relay terminal is a relay terminal that is performing sidelink communication with the terminal.

In some embodiments, the processor is configured to read the computer program in the memory and perform at least one of the following operations:
receiving the first information sent by the terminal;
receiving the first information sent by a core network device.

In some embodiments, the processor is configured to read the computer program in the memory and perform at least one of the following operations:
receiving terminal capability information sent by the terminal, where the terminal capability information carries the first information;
receiving measurement information sent by the terminal, where the measurement information carries the first information;
receiving dedicated signaling sent by the terminal, where the dedicated signaling carries the first information.

In some embodiments, a manner of indicating the protocol release version information supported by the first relay terminal includes at least one of the following:
explicitly indicating a protocol release version supported by the first relay terminal;
implicitly indicating the protocol release version supported by the first relay terminal using bit information.

In some embodiments, the processor is configured to read the computer program in the memory and perform following operations:
determining, according to the first information, SL-SRB configuration information and/or SL-SRB PDCP duplicate transmission configuration information corresponding to the terminal;
sending the SL-SRB configuration information and/or SL-SRB PDCP duplicate transmission configuration information to the terminal.

In some embodiments, the first relay terminal satisfies a first condition;
the first condition includes at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

In FIG. 11, the bus architecture may include any number of interconnected buses and bridges, specifically linking various circuits of one or more processors represented by processor 1110 and memory represented by memory 1120 together. The bus architecture may also link together various other circuits such as peripheral devices, voltage regulators, and power management circuits, which are all well known in the art and, therefore, will not be described further herein. The bus interface provides an interface. The transceiver 1100 may be a plurality of elements, i.e., including a transmitter and a transceiver, providing a unit for communicating with various other devices over a transmission medium. The processor 1110 is responsible for managing the bus architecture and general processing, and the memory 1120 may store data used by the processor 1110 when performing operations.

The processor 1110 may be a CPU, an ASIC, an FPGA, or a CPLD. The processor may also adopt a multi-core architecture.

It should be noted here that the above-mentioned network device provided in the embodiment of the present disclosure can implement all the method steps implemented in the above-mentioned method embodiment applied to the network device, and can achieve the same technical effects. The parts and beneficial effects of this embodiment that are the same as those of the method embodiment will not be described in detail here.

In addition, a specific embodiment of the present disclosure further provides a processor-readable storage medium on which a computer program is stored. When the program is executed by the processor, the steps of the above-mentioned information transmission method are implemented and the same technical effects can be achieved. To avoid repetition, it will not be repeated here. The readable storage medium may be any available medium or data storage device that may be accessed by the processor, including but not limited to magnetic storage (such as floppy disk, hard disk, magnetic tape, magneto-optical disk (MO), etc.), optical storage (such as compact disk (CD), Digital Versatile Disc (DVD), Blu-ray Disc (BD), high-definition versatile disc (HVD), etc.), and semiconductor memory (such as read-only memory (ROM), erasable programmable read-only memory (EPROM), electrically erasable programmable read-only memory (EEPROM), non-volatile memory (NAND FLASH), solid state disk or solid state drive (SSD)), etc.

It should be noted that the technical solutions provided by the embodiments of the present disclosure may be applied to a variety of systems, especially 5G systems. For example, applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal devices and network devices. The systems may also include core network parts, such as Evolved Packet System (EPS), 5G System (5GS), etc.

The terminal device involved in the embodiments of the present disclosure may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). A radio terminal device may communicate with one or more core networks (CN) via a radio access network (RAN). The radio terminal device may be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistants (PDAs), and other devices. The radio terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device involved in the embodiments of the present disclosure may be a base station, which may include multiple cells providing services for terminals. Depending on specific application scenario, the base station may also be called an access point, or may be a device in an access network that communicates with radio terminal devices through one or more sectors on the air interface, or may be called another name. The network device may be used to convert received air frames into and out of Internet Protocol (IP) packets, acting as a router between the radio terminal device and the rest of the access network, which may include an Internet Protocol (IP) communications network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, network devices may include centralized unit (CU) nodes and distributed unit (DU) nodes, and the centralized unit and the distributed unit may also be arranged geographically separately.

Network devices and terminal devices may each use one or more antennas for Multiple Input Multi Output (MIMO) transmission. MIMO transmission may be single-user MIMO (SU-MIMO) or multi-user MIMO (MU-MIMO). Depending on the form and number of antenna combinations, MIMO transmission may be two-dimension MIMO (2D-MIMO), three-dimension MIMO (3D-MIMO), full-dimension MIMO (FD-MIMO), or massive MIMO, or may also be diversity transmission, precoding transmission, or beamforming transmission, etc.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage and optical storage, etc.) containing computer-usable program codes.

The present disclosure is described with reference to flowcharts and/or block diagrams of methods, device (systems), and computer program products according to embodiments of the disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processing machine, or other programmable data processing device to produce a machine, so that the instructions executed by the processor of the computer or other programmable data processing device produce a device for implementing the functions specified in one or more processes in the flowchart and/or one or more blocks in the block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

It should be noted that it should be understood that the division of the above modules is merely a division of logical functions, and in actual implementation, they may be fully or partially integrated into one physical entity, or they may be physically separated. These modules may all be implemented in the form of software called by processing elements, or may also all be implemented in the form of hardware; or some modules may be implemented in the form of software called by processing elements, and some modules may be implemented in the form of hardware. For example, a determination module may be a separately established processing element, or may be integrated into a chip of the above-mentioned device. In addition, it may also be stored in the memory of the above-mentioned device in the form of program code, and called by a processing element of the above-mentioned device to execute the function of the above-mentioned determination module. The implementation of other modules is similar. In addition, all or part of these modules may be integrated together or implemented independently. The processing element mentioned here may be an integrated circuit having a signal processing capability. During implementation, each step of the above method or each module above may be completed by an integrated logic circuit of hardware in a processor element or by instructions in the form of software.

For example, each module, unit, sub-unit or sub-module may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling a program code, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device. In addition, the use of "and/or" in the specification and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

Obviously, those skilled in the art may make various changes and modifications to the present disclosure without departing from the spirit and scope of the present disclosure. Thus, if these changes and modifications of the present disclosure fall within the scope of the claims of the present disclosure and their equivalents, the present disclosure is intended to include these changes and modifications.

## Claims

1. An information transmission method, comprising:
a terminal sending first information to a network device, wherein the first information comprises at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs Packet Data Convergence Protocol (PDCP) duplicate transmission configuration corresponding to signaling radio bearer;
wherein, the multi-path capability comprises supporting multi-path transmission or not supporting multi-path transmission.

2. The method according to claim 1, wherein the first relay terminal is a relay terminal discovered by the terminal through a sidelink discovery, or the first relay terminal is a relay terminal that is performing sidelink communication with the terminal.

3. The method according to claim 1, wherein sending the first information to the network device comprises at least one of the following:
sending terminal capability information to the network device, wherein the terminal capability information carries the first information;
sending measurement information to the network device, wherein the measurement information carries the first information;
sending dedicated signaling to the network device, wherein the dedicated signaling carries the first information.

4. The method according to claim 1, further comprising:
receiving a discovery message sent by the first relay terminal, wherein the discovery message carries at least one of the following information:
the protocol release version information supported by the first relay terminal;
the indication information of the multi-path capability of the first relay terminal.

5. The method according to claim 1 or 4, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

6. The method according to claim 1, further comprising:
receiving sidelink interface split signaling radio bearer (SL-SRB) configuration information and/or SL-SRB PDCP duplicate transmission configuration information sent by the network device.

7. The method according to claim 1, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

8. The method according to claim 3, wherein sending the measurement information to the network device comprises:
sending the measurement information to the network device when a second condition is satisfied.

9. The method according to claim 8, wherein the second condition comprises at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

10. An information transmission method, comprising:
a network device obtaining first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
wherein, the multi-path capability comprises supporting multi-path transmission or not supporting multi-path transmission;
determining a target relay terminal and/or configuration information for the terminal according to the first information.

11. The method according to claim 10, wherein the first relay terminal is a relay terminal discovered by the terminal through a sidelink discovery, or the first relay terminal is a relay terminal that is performing sidelink communication with the terminal.

12. The method according to claim 10, wherein obtaining the first information comprises at least one of the following:
receiving the first information sent by the terminal;
receiving the first information sent by a core network device.

13. The method according to claim 10, wherein obtaining the first information comprises at least one of the following:
receiving terminal capability information sent by the terminal, wherein the terminal capability information carries the first information;
receiving measurement information sent by the terminal, wherein the measurement information carries the first information;
receiving dedicated signaling sent by the terminal, wherein the dedicated signaling carries the first information.

14. The method according to claim 10, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

15. The method according to claim 10, wherein determining the configuration information for the terminal according to the first information comprises:
determining, according to the first information, sidelink interface split signaling radio bearer (SL-SRB) configuration information and/or SL-SRB PDCP duplicate transmission configuration information corresponding to the terminal;
sending the SL-SRB configuration information and/or SL-SRB PDCP duplicate transmission configuration information to the terminal.

16. The method according to claim 10, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

17. A terminal, comprising: a memory, a transceiver, and a processor:
wherein, the memory is configured to store a computer program; the transceiver is configured to receive and transmit data under the control of the processor; and the processor is configured to read the computer program in the memory and perform following operations:
sending first information to a network device, wherein the first information comprises at least one of the following information:
indication information of a multi-path capability of the terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
wherein, the multi-path capability comprises supporting multi-path transmission or not supporting multi-path transmission.

18. The terminal according to claim 17, wherein the first relay terminal is a relay terminal discovered by the terminal through a sidelink discovery, or the first relay terminal is a relay terminal that is performing sidelink communication with the terminal.

19. The terminal according to claim 17, wherein the processor is configured to read the computer program in the memory and perform at least one of the following operations:
sending terminal capability information to the network device, wherein the terminal capability information carries the first information;
sending measurement information to the network device, wherein the measurement information carries the first information;
sending dedicated signaling to the network device, wherein the dedicated signaling carries the first information.

20. The terminal according to claim 17, wherein the processor is configured to read the computer program in the memory and perform the following operations:
receiving a discovery message sent by the first relay terminal, wherein the discovery message carries at least one of the following information:
the protocol release version information supported by the first relay terminal;
the indication information of the multi-path capability of the first relay terminal.

21. The terminal according to claim 17 or 20, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

22. The terminal according to claim 17, wherein the processor is configured to read the computer program in the memory and perform the following operations:
receiving SL-SRB configuration information and/or SL-SRB PDCP duplicate transmission configuration information sent by the network device.

23. The terminal according to claim 17, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

24. The terminal according to claim 19, wherein the processor is configured to read the computer program in the memory and perform the following operations:
sending the measurement information to the network device when a second condition is satisfied.

25. The terminal according to claim 24, wherein the second condition comprises at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

26. A network device, comprising: a memory, a transceiver, and a processor:
wherein, the memory is configured to store a computer program; the transceiver is configured to receive and transmit data under the control of the processor; and the processor is configured to read the computer program in the memory and perform following operations:
obtaining first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
wherein, the multi-path capability comprises supporting multi-path transmission or not supporting multi-path transmission;
determining a target relay terminal and/or configuration information for the terminal according to the first information.

27. The network device according to claim 26, wherein the first relay terminal is a relay terminal discovered by the terminal through a sidelink discovery, or the first relay terminal is a relay terminal that is performing sidelink communication with the terminal.

28. The network device according to claim 26, wherein the processor is configured to read the computer program in the memory and perform at least one of the following operations:
receiving the first information sent by the terminal;
receiving the first information sent by a core network device.

29. The network device according to claim 26, wherein the processor is configured to read the computer program in the memory and perform at least one of the following operations:
receiving terminal capability information sent by the terminal, wherein the terminal capability information carries the first information;
receiving measurement information sent by the terminal, wherein the measurement information carries the first information;
receiving dedicated signaling sent by the terminal, wherein the dedicated signaling carries the first information.

30. The network device according to claim 26, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

31. The network device according to claim 26, wherein the processor is configured to read the computer program in the memory and perform following operations:
determining, according to the first information, SL-SRB configuration information and/or SL-SRB PDCP duplicate transmission configuration information corresponding to the terminal;
sending the SL-SRB configuration information and/or SL-SRB PDCP duplicate transmission configuration information to the terminal.

32. The network device according to claim 26, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

33. An information transmission device, comprising:
a first sending unit, configured to send first information to a network device, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
wherein, the multi-path capability comprises supporting multi-path transmission or not supporting multi-path transmission.

34. The device according to claim 33, wherein the first relay terminal is a relay terminal discovered by the terminal through a sidelink discovery, or the first relay terminal is a relay terminal that is performing sidelink communication with the terminal.

35. The device according to claim 33, wherein the first sending unit is configured to perform at least one of the following:
sending terminal capability information to the network device, wherein the terminal capability information carries the first information;
sending measurement information to the network device, wherein the measurement information carries the first information;
sending dedicated signaling to the network device, wherein the dedicated signaling carries the first information.

36. The device according to claim 33, further comprising:
a first receiving unit, configured to receive a discovery message sent by the first relay terminal, wherein the discovery message carries at least one of the following information:
the protocol release version information supported by the first relay terminal;
the indication information of the multi-path capability of the first relay terminal.

37. The device according to claim 33 or 36, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

38. The device according to claim 33, further comprising:
a second receiving unit, configured to receive SL-SRB configuration information and/or SL-SRB PDCP duplicate transmission configuration information sent by the network device.

39. The device according to claim 33, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

40. The device according to claim 35, wherein the first sending unit is specifically configured to:
send the measurement information to the network device when a second condition is satisfied.

41. The device according to claim 40, wherein the second condition comprises at least one of the following:
sidelink interface channel quality between a relay terminal currently serving the terminal and the terminal is lower than a third value;
Uu interface channel quality between the relay terminal currently serving the terminal and the network device is lower than a fourth value;
Uu interface channel quality of at least one cell currently serving the terminal is lower than a fifth value;
sidelink interface channel quality between the first relay terminal and the terminal is higher than a sixth value;
Uu interface channel quality between the first relay terminal and the network device is higher than a seventh value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device.

42. An information transmission device, comprising:
a first obtaining unit, configured to obtain first information, wherein the first information comprises at least one of the following information:
indication information of a multi-path capability of a terminal;
protocol release version information supported by a first relay terminal;
indication information of a multi-path capability of the first relay terminal;
indication information that the terminal needs split signaling radio bearer configuration;
indication information that the terminal needs PDCP duplicate transmission configuration corresponding to signaling radio bearer;
wherein, the multi-path capability comprises supporting multi-path transmission or not supporting multi-path transmission;
a first processing unit, configured to determine a target relay terminal and/or configuration information for the terminal according to the first information.

43. The device according to claim 42, wherein the first relay terminal is a relay terminal discovered by the terminal through a sidelink discovery, or the first relay terminal is a relay terminal that is performing sidelink communication with the terminal.

44. The device according to claim 42, wherein the first obtaining unit is specifically configured to perform at least one of the following:
receiving the first information sent by the terminal;
receiving the first information sent by a core network device.

45. The device according to claim 42, wherein the first obtaining unit is specifically configured to perform at least one of the following:
receiving terminal capability information sent by the terminal, wherein the terminal capability information carries the first information;
receiving measurement information sent by the terminal, wherein the measurement information carries the first information;
receiving dedicated signaling sent by the terminal, wherein the dedicated signaling carries the first information.

46. The device according to claim 42, wherein a manner of indicating the protocol release version information supported by the first relay terminal comprises at least one of the following:
explicitly indicating a protocol release version supported by the first relay terminal;
implicitly indicating the protocol release version supported by the first relay terminal using bit information.

47. The device according to claim 42, wherein the first processing unit is specifically configured to:
determine, according to the first information, SL-SRB configuration information and/or SL-SRB PDCP duplicate transmission configuration information corresponding to the terminal;
send the SL-SRB configuration information and/or SL-SRB PDCP duplicate transmission configuration information to the terminal.

48. The device according to claim 42, wherein the first relay terminal satisfies a first condition;
the first condition comprises at least one of the following:
sidelink interface channel quality between the first relay terminal and the terminal is higher than a first value;
Uu interface channel quality between the first relay terminal and the network device is higher than a second value;
the sidelink interface channel quality between the first relay terminal and the terminal is higher than sidelink interface channel quality between a second relay terminal currently serving the terminal and the terminal;
the Uu interface channel quality between the first relay terminal and the network device is higher than Uu interface channel quality between the second relay terminal currently serving the terminal and the network device;
a network device serving the first relay terminal is the same as the network device serving the terminal.

49. A processor-readable storage medium having a computer program stored thereon, wherein the computer program is executed by a processor to implement the steps of the information transmission method according to any one of claims 1 to 9, or to implement the steps of the information transmission method according to any one of claims 10 to 16.
